# FASCICULE DE BREVET EUROPEEN

(11) **EP 0 662 896 B1**
(45) Date de publication et mention de la délivrance du brevet: **10.04.1996**
(21) Numéro de dépôt: 93919436.1
(22) Date de dépôt: 10.09.1993
(51) Int. Cl.: B60T 13/567

(54) **DISPOSITIF DE FREINAGE A MONTAGE RIGIDE**
STARR ABGESTÜTZTE BREMSVORRICHTUNG
RIGIDLY MOUNTED BRAKING DEVICE

(30) Priorité: 07.10.1992 FR 9211861
(43) Date de publication de la demande: 19.07.1995
(73) Titulaire: ALLIEDSIGNAL EUROPE SERVICES TECHNIQUES, F-93700 Drancy (FR)
(72) Inventeur: CASTEL, Philippe, F-75005 Paris (FR); LAURENT, Jacques, F-93110 Rosny-sous-Bois (FR)
(74) Mandataire: Bentz, Jean-Paul
(86) Numéro de dépôt international: FR9300865
(87) Numéro de publication internationale: WO9407724

(56) Documents cités:
- DE-U- 9 109 689
- GB-A- 2 017 852
- GB-A- 2 018 923
- US-A- 2 731 797

## Description

La présente invention concerne un dispositif de freinage assisté pour véhicule à moteur, comportant, en tant qu'éléments, un maître-cylindre, un servomoteur pneumatique d'assistance actionnant le maître-cylindre, une pédale de frein actionnant le servomoteur par l'intermédiaire d'une tige de commande, un tablier, et des moyens mécaniques destinés à maintenir les éléments du dispositif dans une configuration fonctionnelle prédéterminée et incluant un support de pédale et une ouverture dans le tablier, le servomoteur comprenant lui-même une enveloppe étanche formée de deux demi-coquilles dont la première est reliée au maître-cylindre et la seconde à la pédale de frein.

Ces dispositifs sont bien connus dans l'art antérieur et sont pratiquement utilisés sur tous les véhicules de tourisme dotés d'un freinage assisté.

En particulier, un dispositif du type précédemment défini est décrit dans le document GB-A-2 018 923.

L'un des objectifs permanents dans la conception et la fabrication de tels dispositifs est de réduire leur coût et/ou leur poids tout en cherchant à améliorer leurs qualités fonctionnelles.

En particulier, l'un de ces objectifs est de réduire les quantités de matière requises pour la fabrication de ces dispositifs, tout en conservant ou en améliorant leur rigidité et leur résistance mécanique en fonctionnement.

Bien que le dispositif connu du document GB-A-2 018 923 vise ce même objectif, il requiert l'emploi d'une bride de maintien épaisse qui augmente sensiblement le poids du servomoteur.

Le dispositif de l'invention s'inscrit dans la même démarche et atteint son objectif en prévoyant que les moyens mécaniques précédemment évoqués comprennent :
- une protubérance de la première demi-coquille, cette protubérance étant engagée à travers l'ouverture du tablier et l'obturant au moins partiellement ;
- un renfort en forme de chapeau à rebord, plaqué à l'intérieur de la protubérance, ce renfort ayant d'une part un fond percé supportant le maître-cylindre et dans lequel ce dernier est engagé, et d'autre part un rebord appuyant la première demi-coquille, à la périphérie de sa protubérance, sur le bord de l'ouverture du tablier ; et
- au moins des premiers moyens de fixation pour fixer au tablier le support de pédale en un premier point de fixation de ce dernier.

De préférence, ce dispositif comprend en outre au moins des seconds moyens de fixation pour fixer au tablier le support de pédale en un second point de fixation de ce dernier, les premier et second points de fixation étant disposés de part et d'autre du servomoteur de façon sensiblement symétrique par rapport à la tige de commande.

Par ailleurs, il est avantageux que le tablier présente une cavité au fond de laquelle est percée ladite ouverture et dans laquelle est logé le servomoteur à l'exception de sa protubérance, et que les premier et second points de fixation soient disposés de part et d'autre de cette cavité.

Selon un mode de réalisation très simple à mettre en oeuvre, le support de pédale comprend deux flasques reliés entre eux et est obtenu par pliage d'une pièce unique.

D'autres caractéristiques et avantages de l'invention ressortiront clairement de la description qui en est faite ci-après, à titre indicatif et nullement limitatif, en référence aux dessins annexés dans lesquels :
- La Figure 1 est une vue en coupe d'un dispositif conforme à l'invention, faite suivant la ligne I-I de la Figure 2 ; et
- La Figure 2 est une vue de face de ce dispositif, examiné dans la direction de la flèche II apparaissant sur la Figure 1.

Le dispositif de l'invention comprend un maître-cylindre 1, un servomoteur 2 supportant le maître-cylindre et propre à le commander, une pédale de frein 3 susceptible d'actionner le servomoteur 2 par l'intermédiaire d'une tige de commande 4, un tablier 5 appartenant au véhicule, et des moyens mécaniques divers pour fixer l'ensemble, le rigidifier et plus généralement le maintenir dans sa configuration fonctionnelle, ces moyens incluant un support de pédale 6.

Le servomoteur 2 comprend une enveloppe étanche formée de deux demi-coquille 7a, 7b dont la première est reliée au maître-cylindre et la seconde à la pédale de frein.

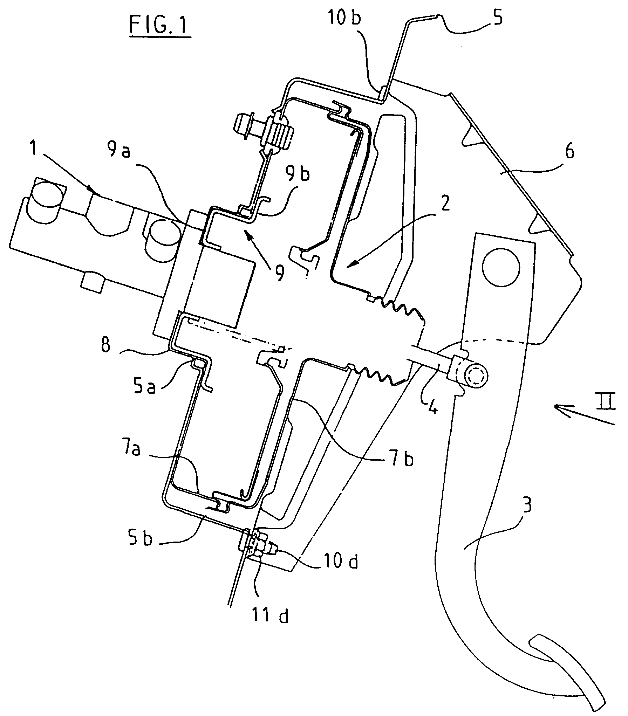

Comme le montre la Figure 1, le tablier 5 est percé d'une ouverture circulaire 5a que traverse avec un jeu minimal une protubérance cylindrique 8 de la première demi-coquille 7a du servomoteur 2.

Un renfort 9 en forme de chapeau à rebord, dont la forme externe épouse la forme interne de la demi-coquille 7a du côté de la protubérance 8, est plaqué à l'intérieur de cette dernière.

Le fond 9a de ce renfort est percé et reçoit le maître-cylindre 1 auquel il est fixé, tandis que le rebord 9b de ce renfort appuie la première demi-coquille 7a, à la périphérie de la protubérance 8, contre la surface bordant l'ouverture 5a du tablier 5, la solidarisation des différentes pièces assemblées étant réalisée par tout moyen connu.

Des moyens de fixation, tels que boulons et écrous 10a, 11a, 10b, 11b, 10c, 11c et 10d, 11d, permettent de fixer le support de pédale 6 au tablier en au moins un point de fixation, et en l'occurrence en quatre points de fixation 6a, 6b, 6c et 6d.

Ces points de fixation sont de préférence sensiblement symétriques les uns des autres deux à deux par rapport à la tige de commande 4.

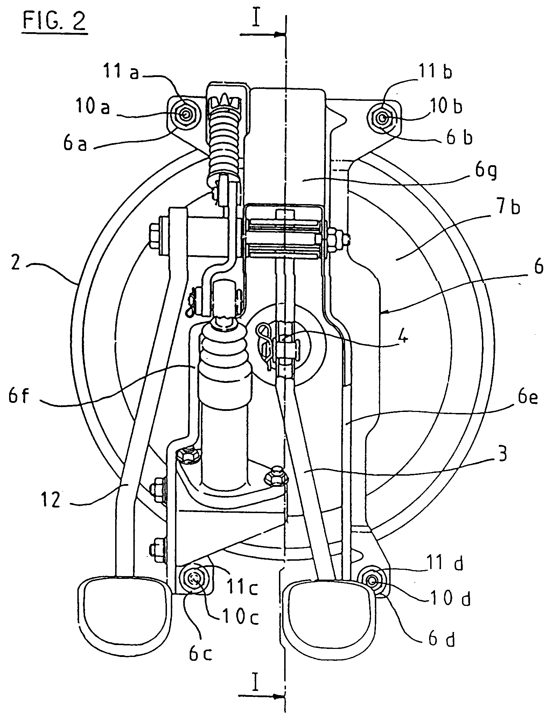

Comme le montre la Figure 2, le support de pédale 6 comprend avantageusement deux flasques 6e, 6f reliés entre eux par un pont 6g, parallèles l'un à l'autre et à la direction de la tige de commande 4, ce support étant réalisé par pliage d'une pièce unique.

Une telle disposition, telle qu'illustrée sur la Figure 2, permet notamment le montage de la pédale d'embrayage 12 sur le même support 6 que la pédale de frein 3.

Par ailleurs, comme le montre la Figure 1, le tablier 5 peut présenter une cavité 5b au fond de laquelle est percée l'ouverture circulaire 5a, et dans laquelle la première coquille 7a se trouve logée, à l'exception de sa protubérance cylindrique 8,, le support de pédale 6 se trouvant alors fixé au tablier 5 en des points situés au bord de cette cavité.

## Revendications

1. Dispositif de freinage assisté pour véhicule à moteur, comportant, en tant qu'éléments, un maître-cylindre (1), un servomoteur pneumatique d'assistance (2) actionnant le maître-cylindre, une pédale de frein (3) actionnant le servomoteur par l'intermédiaire d'une tige de commande (4), un tablier (5), et des moyens mécaniques destinés à maintenir les éléments du dispositif dans une configuration fonctionnelle prédéterminée et incluant un support de pédale et une ouverture (5a) dans le tablier, le servomoteur comprenant lui-même une enveloppe étanche formée de deux demi-coquilles (7a, 7b) dont la première est reliée au maître-cylindre et la seconde à la pédale de frein, caractérisé en ce que lesdits moyens mécaniques comprennent :
- une protubérance (8) de la première demi-coquille, cette protubérance étant engagée à travers l'ouverture du tablier et l'obturant au moins partiellement ;
- un renfort (9) en forme de chapeau à rebord, plaqué à l'intérieur de la protubérance, ce renfort ayant d'une part un fond percé (9a) supportant le maître-cylindre et dans lequel ce dernier est engagé, et d'autre part un rebord (9b) appuyant la première demi-coquille, à la périphérie de sa protubérance, sur le bord de l'ouverture du tablier ; et
- au moins des premiers moyens (10a, 11a, 10b, 11b) de fixation pour fixer au tablier le support de pédale en un premier point de fixation de ce dernier.

2. Dispositif suivant la revendication 1, caractérisé en ce qu'il comprend en outre au moins des seconds moyens de fixation (10c, 11c, 10d, 11d) pour fixer au tablier le support de pédale en un second point de fixation de ce dernier, les premier et second points de fixation étant disposés de part et d'autre du servomoteur de façon sensiblement symétrique par rapport à la tige de commande.

3. Dispositif suivant la revendication 2, caractérisé en ce que le tablier présente une cavité (5b) au fond de laquelle est percée ladite ouverture et dans laquelle est logée au moins la première coquille du servomoteur à l'exception de sa protubérance, et en ce que les premier et second points de fixation sont disposés de part et d'autre de cette cavité.

4. Dispositif suivant la revendication 1, caractérisé en ce que ledit support de pédale comprend deux flasques (6e, 6f) reliés entre eux et en ce qu'il est obtenu par pliage d'une pièce unique.

## Claims

1. Brake-booster device for a motor vehicle, comprising, as members, a master cylinder (1), a pneumatic booster (2) actuating the master cylinder, a brake pedal (3) actuating the booster through the intermediary of a control rod (4), a bulkhead (5), and mechanical means designed to maintain the members of the device in a predetermined functional configuration and including a pedal support and an aperture (5a) in the bulkhead, the booster per se comprising a leaktight casing formed of two half-shells (7a, 7b) the first of which is connected to the master cylinder and the second to the brake pedal, characterized in that the said mechanical means comprise:
- a protuberance (8) of the first half-shell, this protuberance being engaged through the aperture of the bulkhead and closing it at least partially;
- a reinforcement (9) in the shape of a hat with a rim, pushed home inside the protuberance, this reinforcement having on the one hand a pierced bottom (9a) supporting the master cylinder and in which the latter is engaged, and on the other hand a rim (9b) pressing the first half-shell, at the periphery of its protuberance, onto the edge of the aperture of the bulkhead; and
- at least first attachment means (10a, 11a, 10b, 11b) for attaching to the bulkhead the pedal support at a first attachment point of the latter.

2. Device according to Claim 1, characterized in that it further comprises at least second attachment means (10c, 11c, 10d, 11d) for attaching to the bulkhead the pedal support at a second attachment point of the latter, the first and second attachment points being disposed on either side of the booster in substantially symmetrical manner with respect to the control rod.

3. Device according to Claim 2, characterized in that the bulkhead has a cavity (5b) at the bottom of which is pierced the said aperture and in which is housed at least the first shell of the booster with the exception of its protuberance, and in that the first and second attachment points are disposed on either side of this cavity.

4. Device according to Claim 1, characterized in that the said pedal support comprises two side plates (6e, 6f) connected to one another and in that it is obtained by bending a single part.

## Patentansprüche

1. Vorrichtung zum unterstützten Bremsen für ein Kraftfahrzeug, die als Elemente einen Hauptzylinder (1), einen pneumatischen Bremsunterstützungs-Servomotor (2), der den Hauptzylinder betätigt, ein Bremspedal (3), welches den Servomotor mittels einer Steuerstange (4) betätigt, eine Spritzwand (5) sowie mechanische Mittel enthält, die dafür bestimmt sind, die Elemente der Vorrichtung in einer vorbestimmten funktionellen Konfiguration zu halten und einen Pedalträger sowie eine Öffnung (5a) in der Spritzwand enthalten, wobei der Servomotor wiederum ein dichtes Gehäuse enthält, welches durch zwei Schalen (7a, 7b) gebildet ist, von denen die erste mit dem Hauptzylinder und die zweite mit dem Bremspedal verbunden ist, dadurch gekennzeichnet, daß die mechanischen Mittel enthalten:
- einen Vorsprung (8) der ersten Schale, der die Öffnung der Spritzwand durchgreift und diese wenigstens teilweise verschließt;
- eine Verstärkung (9) in der Form eines Deckels mit umgebogenem Rand, der auf das Innere des Vorsprunges aufgebracht ist, wobei die Verstärkung zum einen einen durchbrochenen Boden (9a) enthält, der den Hauptzylinder trägt und in welchen dieser eingreift, und zum anderen eine Umbiegung (9b), welche an der ersten Schale am Umfang ihres Vorsprunges am Rand der Öffnung der Spritzwand anliegt; und
- wenigstens erste Befestigungsmittel (10a, 11a, 10b, 11b) zum Befestigen des Pedalträgers an der Spritzwand an einer ersten Befestigungsstelle von diesem.

2. Vorrichtung nach Anspruch 1, dadurch gekennzeichnet, daß sie außerdem zweite Befestigungsmittel (10c, 11c, 10d, 11d) enthält, um den Pedalträger an der Spritzwand an einer zweiten Befestigungsstelle von diesem zu befestigen, wobei die ersten und die zweiten Befestigungsmittel beiderseits des Servomotors in bezüglich der Steuerstange im wesentlichen symmetrischer Weise angeordnet sind.

3. Vorrichtung nach Anspruch 2, dadurch gekennzeichnet, daß die Spritzwand eine Vertiefung (5b) aufweist, an deren Boden die Öffnung ausgebildet ist und in der wenigstens teilweise die erste Schale des Servomotors mit Ausnahme des Vorsprunges angeordnet ist, und daß die erste und die zweite Befestigungsstelle auf der einen und auf der anderen Seite dieses Hohlraumes angeordnet sind.

4. Vorrichtung nach Anspruch 1, dadurch gekennzeichnet, daß der Pedalträger zwei Flansche (6e, 6f) enthält, die miteinander verbunden sind, und daß der Pedalträger durch Biegen eines einzigen Teils erhalten ist.
